# EUROPÄISCHE PATENTSCHRIFT

(11) **EP 3 106 261 B1**
(45) Veröffentlichungstag und Bekanntmachung des Hinweises auf die Patenterteilung: **28.10.2020**
(21) Anmeldenummer: 16171114.8
(22) Anmeldetag: 24.05.2016
(51) Int. Cl.: B23Q 17/09, B26D 5/00

(54) **SCHNEIDWERKZEUGHALTER MIT EINEM STEUERMODUL**
CUTTING TOOL HOLDER WITH A CONTROL MODULE
SUPPORT D'OUTIL DE COUPE DOTE D'UN MODULE DE COMMANDE

(30) Priorität: 29.05.2015 DE 102015108506
(43) Veröffentlichungstag der Anmeldung: 21.12.2016
(73) Patentinhaber: Dienes Werke für Maschinenteile GmbH & Co. KG, 51491 Overath (DE)
(72) Erfinder: Thielen, Rolf, 50733 Köln (DE)
(74) Vertreter: Feucker, Max Martin

(56) Entgegenhaltungen:
- WO-A1-2005/063437
- DE-A1- 10 002 305
- DE-A1- 10 029 448
- DE-A1-102005 013 289
- DE-A1-102007 001 620
- DE-T5-112005 003 148
- US-A1- 2007 005 158
- US-B1- 6 732 625

## Beschreibung

Die vorliegende Erfindung betrifft ein Schneidwerkzeughalter zum Halten und Antreiben eines Schneidwerkzeuges, umfassend mindestens einen Aktuator zum Einstellen von mindestens einem Betriebszustand des Schneidwerkzeughalters, wobei an dem Schneidwerkzeughalter ein mit dem Aktuator verbundenes Steuermodul angebracht ist.

Bei Längsschneidemaschinen ist üblicherweise eine Mehrzahl von Messerhaltern nebeneinander angeordnet. Jeder Messerhalter umfasst einen Aktuator, der das insbesondere als Rundmesser ausgebildete Schneidwerkzeug in der vertikalen Richtung verstellen kann. Ferner kann ein Aktuator vorgesehen sein, der das Rundmesser seitlich anstellt und andrückt. Um die genaue Position des Rundmessers wie auch die jeweilige Andrückkraft bestimmen zu können, sind entsprechende Sensoren vorgesehen. Zudem können weitere Sensoren vorgesehen sein, die weitere Parameter, wie beispielsweise die Temperatur der Rundmesserlagerung überwachen. Jeder einzelne Aktuator und jeder einzelne Sensor eines jeden Messerhalters ist über ein eigenes Kabel mit einer zentralen Steuereinheit, insbesondere einer speicherprogrammierbaren Steuerung verbunden. Um den Aufwand bei der Montage von Längsschneidemaschinen und beim Wechsel oder der Neupositionierung von Messerhaltern zu reduzieren, ist es bereits bekannt, BUS-Systeme zu verwenden, über welche die Daten der Sensoren und die Steuerungssignale für die Aktuatoren übermittelt werden. Nachteilig an einer solchen Ausführung ist, dass Betriebszustände und Parameter des Schneidwerkzeughalters nur von der übergeordneten speicherprogrammierbaren Steuereinheit zugänglich sind. Insbesondere können die zur Überwachung des Schneidvorgangs relevanten Parameter nur zentral überwacht werden. Zudem können Änderungen der Parameter und die in einem folgenden Schritt einzunehmenden Betriebszustände nur bei Stillstand zentral an der übergeordneten Steuereinheit eingestellt werden. Die schnellstmögliche Zeit für die Änderung des Betriebszustandes ist zudem durch die Laufzeiten des BUS-Systems vorgegeben, da jeder Schritt der Betriebszustandsänderung eines jeden Messerhalters zentral von der speicherprogrammierbaren Steuereinheit gesteuert wird. Ein mobiler Zugang für eine Bedienperson, die sich an der Längsschneidemaschine befindet, ist nicht vorgesehen.

Ein Spannfutter als Werkzeughalter mit den eingangs genannten Merkmalen ist aus WO 2005/063437 A1 bekannt, wobei die jeweils als Steuermodul aufzufassenden Schalter jeweils über eine Funksendeeinheit betätigbar sind, sodass nach Erhalt eines von der Funksendeeinheit alten Befehlssignals der Zustand des jeweils mit dem Schalter gekoppelten Aktorenkörpers geändert wird. Die Speicherung des Systemzustandes an dem Schneidwerkzeughalter ist hingegen nicht vorgesehen, so dass der durch den Schalter herbeigeführte Zustand nur auf der übergeordneten, der Funksendeeinheit Befehlssignale sendenden Steuerung gespeichert ist. Aus DE 100 29 448 A1 ist zudem ein Prozessleittechniksystem bekannt, dessen Feldgerät mit einer TCP/IP-Schnittstelle ausgerüstet ist. Aus DE 11 2005 003 148 T5 ist eine Kreissäge bekannt, die einen Sensor zur Bestimmung des Typs des Blattes und des Typs des zu schneidenden Materials aufweist. Aus DE 100 02 305 A1 ist wiederum ein Managementsystem für eine Vielzahl von Schneidmaschinen bekannt.

Aufgabe der vorliegenden Erfindung ist es daher, die mit Bezug zum Stand der Technik geschilderten Probleme zumindest teilweise zu lösen und insbesondere einen Schneidwerkzeughalter und ein Verfahren zum Betreiben einer Schneidmaschine anzugeben, mit denen die Bedienung einer Schneidmaschine vereinfacht wird und ein präziseres Regeln des Aktuators möglich ist. Gelöst werden diese Aufgaben durch einen Schneidwerkzeughalter und ein Verfahren mit den Merkmalen der unabhängigen Ansprüche. Vorteilhafte Weiterbildungen der Erfindung sind in den abhängigen Ansprüchen und in der Beschreibung angegeben, wobei Merkmale der vorteilhaften Weiterbildungen in technologisch sinnvoller Weise beliebig miteinander kombinierbar sind.

Gelöst werden diese Aufgaben insbesondere durch einen Schneidwerkzeughalter, insbesondere Messerhalter mit den eingangs genannten Merkmalen, wobei das Steuermodul den Aktuator unmittelbar eigenständig betätigt und auf dam Steuermodul Informationen über den Betriebszustand speicherbar sind, wobei auf dem Steuermodul ein TCP- und/oder UDP-basierter Server, insbesondere ein Webserver eingerichtet ist, so dass Informationen von einem webbrowserfähigem Endgerät über einen einzunehmenden Betriebszustand empfangbar und Informationen über den aktuellen Betriebszustand an das webbrowserfähige Endgerät sendbar sind.

Bevorzugt ist der Schneidwerkzeughalter ein Messerhalter und das Schneidwerkzeug ein Rundmesser, wobei das Rundmesser insbesondere durch den Aktuator in der vertikalen Richtung verstellt werden kann und durch einen gegebenenfalls weiteren Aktuator seitlich angestellt und angedrückt werden kann.

Das Steuermodul an dem Schneidwerkzeughalter ist insbesondere ein CPU gestützter Computer und nicht nur zur Steuerung insbesondere aller Aktuatoren des Schneidwerkzeughalters eingerichtet, sondern speichert neben den Betriebszuständen insbesondere auch alle weiteren Parameter des Schneidwerkzeughalters. Unter Betriebszuständen sind insbesondere solche Größen zu verstehen, die von dem einen oder den mehreren Aktuatoren unmittelbar geändert werden können. Hierzu zählt beispielsweise die Position des Schneidwerkzeuges. Unter Parameter sind alle solchen Größen zu verstehen, die wenn überhaupt nur mittelbar mittels der Aktuatoren beeinflussbar sind. Hierzu zählen zum Beispiel die Lagertemperatur des Schneidwerkzeuges und der Durchmesser eines Rundmessers im Auslieferungszustand und im aktuellen Zustand.

Das Steuermodul ist also eingerichtet und ausgestattet, um autonom den Aktuator von einem Betriebszustand in einen anderen Betriebszustand zu bringen, ohne dass während dieser Änderung des Betriebszustandes auf Signale einer übergeordneten Steuereinheit zurückgegriffen werden muss. Das Steuermodul ist bevorzugt unmittelbar mit dem Aktuator verbunden, so dass der Aktuator aufgrund eines Signals von dem Steuermodul den Betriebszustand des Schneidwerkzeughalters ändert. Hierbei kann das Steuermodul durch ein entsprechendes Steuersignal den einzunehmenden Betriebszustand direkt vorgeben oder durch Rückgriff auf Informationen von entsprechenden insbesondere unmittelbar mit dem Steuermodul verbundenen Sensoren den Aktuator bis zum Erreichen des einzunehmenden Betriebszustandes regeln. Das Ändern des Betriebszustandes kann aufgrund der eigenständigen Betätigung des Aktuators durch das Steuermodul in Echtzeit erfolgen.

Auf dem Steuermodul ist zudem ein TCP- und/oder UDP-basierter Server eingerichtet, so dass mit dem Steuermodul insbesondere mittels TCP/IP kommuniziert werden kann. Durch den TCP- und/oder UDP-basierten Server (im Folgenden: Server) wird ermöglicht, dass mit dem Steuermodul auf Basis eines standardisierten Protokolls kommuniziert werden kann. Die auf dem Steuermodul gespeicherten Informationen können, soweit diese freigegeben sind, mit webbrowserfähigen Endgeräten abgerufen und gegebenenfalls auch geändert werden. Zudem können über den Server mit webbrowserfähigen Endgeräten Informationen insbesondere über Parameter des Schneidwerkzeughalters auf dem Steuermodul gespeichert werden. Insbesondere kann ein einzunehmender Betriebszustand mittels des Servers auf dem Steuermodul gespeichert werden, so dass bevorzugt nach Erhalt eines Freigabesignals das Steuermodul den einzunehmenden Betriebszustand autonom durch Beeinflussung des Aktuators herbeiführen kann.

Somit ist einerseits die Bedienung über insbesondere mobile, webbrowserfähige Endgeräte vereinfacht und andererseits wird die Präzision der Änderung des Betriebszustandes erhöht, da das Steuermodul ggf. nach Erhalt eines Freigabesignals den Betriebszustand des Schneidwerkzeughalters über den Aktuator eigenständig verändert. Die Geschwindigkeit der Betriebszustandsänderung ist somit durch die Taktung des Steuermoduls auf dem Schneidwerkzeughalter vorgeben und nicht durch die Zykluszeiten eines BUS-Systems oder durch die Zykluszeiten einer übergeordneten Steuereinheit. Somit können die Stellzeiten verkürzt werden, obwohl die Übertragungsrate des Ethernetstandards zur Übertragung von Informationen zu dem Server verglichen mit den Übertragungsraten einer speicherprogrammierbaren Steuereinheit langsamer sind. Insbesondere sind somit auch keine die Steuerung verlangsamenden BUS-Knoten erforderlich.

Mit der vorliegenden Erfindung ist es insbesondere möglich, Betriebszustände des Schneidwerkzeughalters über ein mobiles Endgerät jederzeit abzurufen, wobei auch einzunehmende Betriebszustände des Werkzeughalters von dem mobilen Endgerät aus vorgegeben werden können. Somit können Betriebszustände, die in einem folgenden Bearbeitungsschritt eingenommen werden sollen, bereits während des aktuellen Betriebes vorgegeben werden. Beispielsweise kann bei einer beabsichtigten Neupositionierung schon während der vorhergehenden Bearbeitung die später einzunehmende Position eingegeben werden, welche dann beim Stillstand des Schneidwerkzeuges unmittelbar angefahren wird. Somit ist die Bedienung des Schneidwerkzeughalters stark vereinfacht.

Zudem kann insbesondere vorgesehen sein, dass mindestens ein weiterer Parameter des Schneidwerkzeughalters auf dem Steuermodul speicherbar ist, wobei zumindest der auf dem Steuermodul gespeicherte, weitere Parameter sowohl von einer übergeordneten Steuereinheit als auch von einem den Betrieb des Schneidwerkzeughalters nicht unmittelbar beeinflussenden mobilen Endgerät abrufbar und/oder veränderbar ist.

Die auf dem Steuermodul gespeicherten Parameter sind somit ebenfalls nicht nur von der übergeordneten Steuereinheit, sondern auch von dem mobilen Endgerät abrufbar und insbesondere veränderbar. Die tatsächlichen Betriebszustände des Schneidwerkzeughalters sind unmittelbar nur durch das Steuermodul, insbesondere erst nach Freigabe durch die übergeordnete Steuereinheit veränderbar. Dies bedeutet insbesondere, dass ein Parameter des Schneidwerkzeughalters durch das mobile Endgerät erfasst werden kann und dieser entsprechende Parameter dann auf dem Steuermodul gespeichert werden kann. Der gespeicherte Parameter ist dann wiederum von der übergeordneten Steuereinheit abrufbar, so dass diese gegebenenfalls in Abhängigkeit von dem abgerufenen Parameter eine Änderung des Betriebszustands mittels des Steuermoduls zu gegebener Zeit veranlassen kann.

Die übergeordnete Steuereinheit ist insbesondere eine speicherprogrammierbare Steuereinheit, ein CPU gestützter Rechnung und/oder ein ähnliches Steuergerät. Bevorzugt setzt sich die übergeordnete Steuereinheit aus einer speicherprogrammierbaren Steuereinheit und einem Linux basierten Rechner zur Kommunikation mit den Steuermodulen zusammen.

Somit ist es nun möglich, gespeicherte Parameter des Schneidwerkzeughalters über ein mobiles Endgerät jederzeit abzurufen. Zudem ist es möglich eine Änderung des Parameters mit dem mobilen Endgerät festzustellen und von dem mobilen Endgerät aus auf dem entsprechenden Steuermodul zu speichern. Zudem können auch Parameter von in einem folgenden Bearbeitungsschritt eingesetzten Schneidwerkzeughaltern bereits während des Betriebes erfasst werden. Somit ist die Bedienung des Schneidwerkzeughalters noch weiter vereinfacht.

Um den Verkabelungsaufwand eines Schneidwerkzeughalters bei dessen Installation und Austausch zu verringern, kann vorgesehen sein, dass das Steuermodul sowohl Signale, insbesondere von der übergeordneten Steuereinheit als auch die Energie zum Betreiben zumindest des Aktuators über ein einziges Kabel erhält. Ein solches einziges Kabel kann beispielsweise ein Kabel mit einem RJ45 Stecker an seinem Ende sein. Das Steuermodul ist insbesondere so eingerichtet, dass es verschiedene Potentiale zur Verfügung stellen kann, die den Aktuator, mindestens einen Sensor und/oder das Steuermodul mit Energie versorgen. Das Steuermodul ist also insbesondere so eingerichtet, dass die an den einzelnen Adern des Kabels anliegenden Spannungen in unterschiedliche konstante Potentiale als Versorgungspannungen für die Komponenten des Schneidwerkzeughalters gewandelt werden.

Um die Verkabelung eines Sensors bis zur übergeordneten Steuereinheit verzichtbar zu machen, kann vorgesehen sein, dass ein den Parameter und/oder Betriebszustand des Schneidwerkzeuges ermittelnder Sensor mit dem Steuermodul unmittelbar verbunden ist, Somit muss eine Verkabelung des Sensors nur bis zu dem an dem Schneidwerkzeughalter angebrachten Steuermodul erfolgen.

Es kann auch vorgesehen sein, dass ein Parameter des Schneidwerkzeughalters oder des Schneidwerkzeuges mittels eines nicht unmittelbar mit dem Steuermodul verbundenen, insbesondere in dem mobilen Endgerät integrierten Sensors erfassbar ist und insbesondere von dem mobilen Endgerät an das Steuermodul übertragbar und auf dem Steuermodul speicherbar ist. Bei einer solchen Ausgestaltung kann der Sensor über geeignete Mittel drahtlos mit dem Steuermodul an dem Schneidwerkzeughalter kommunizieren. Insbesondere kann in diesem Zusammenhang eine Kamera eines mobilen Endgerätes dazu verwendet werden, einen Parameter des Schneidwerkzeughalters zu erfassen und auf dem Steuermodul zu speichern. Beispielsweise kann so der Ursprungsdurchmesser eines Rundmessers oder der aktuelle Durchmesser eines Rundmessers ermittelt werden und an das Steuermodul des entsprechenden Schneidwerkzeughalters übertrager, werden. Dies hat den Vorteil, dass beispielsweise bei Neuinstallation eines Messers dieses sehr einfach mittels des mobilen Endgeräts erfasst werden kann und dessen Parameter auf einfache Weise an das am Schneidwerkzeughalter angebrachte Steuermodul übertragen werden kann. Die dem Schneidwerkzeughalter zugeordneten Parameter sind also lokal auf dem Steuermodul des Schneidwerkzeughalters gespeichert.

Damit insbesondere ein mobiles Endgerät den Schneidwerkzeughalter identifizieren kann, zu dem es gegebenenfalls später einen Parameter an das Steuermodul an diesem Schneidwerkzeughalter übermittelt, kann vorgesehen sein, dass ein ein- oder zweidimensionaler, maschinenlesbarer Code außen auf dem Schneidwerkzeughalter ausgebildet ist, der den Schneidwerkzeughalter, insbesondere für das mobile Endgerät identifiziert. Der eindimensionale maschinenlesbare Code ist insbesondere ein Barcode und der zweidimensionale maschinenlesbare Code ist insbesondere ein QR-Code.

Es kann zudem vorgesehen sein, dass ein ein- oder zweidimensionaler, maschinenlesbarer Code auf dem Schneidwerkzeug ausgebildet ist, der einen Ausgangszustand des Schneidwerkzeuges wiedergibt, so dass der Ausgangszustand insbesondere für das mobile Endgerät erfassbar ist, wodurch der Ausgangszustand an das Steuermodul übermittelbar und auf dem Steuermodul speicherbar ist. Mit dem Ausgangszustand des Schneidwerkzeuges kann insbesondere dessen Durchmesser, dessen Breite oder dessen weiteren Eigenschaften gemeint sein. Somit kann der Ausgangszustand des Schneidwerkzeuges sehr einfach erfasst werden und an das Steuermodul des Schneidwerkzeughalters übermittelt werden, an den das Schneidwerkzeug montiert wird.

Um den reibungslosen Betrieb einer Schneidmaschine zu gewährleisten, kann vorgesehen sein, dass das Steuermodul so eingerichtet ist, dass eine Änderung eines Betriebszustandes nur nach vorheriger Freigabe durch die übergeordnete Steuereinheit erfolgt.

Gelöst werden die eingangs genannten Aufgaben auch durch eine Schneidmaschine mit einer Mehrzahl von erfindungsgemäßen Schneidwerkzeughaltern, die eine zentrale, übergeordnete Steuerungseinheit, insbesondere speicherprogrammierbare Steuerung umfasst, welche die Vielzahl der Schneidwerkzeughalter steuert oder regelt.

Gelöst werder" die eingangs genannten Aufgaben auch durch ein Verfahren zum Betreiben einer Schneidmaschine mit einer Mehrzahl von Schneidwerkzeughaltern, umfassend zumindest die folgenden Schritte:
a) Erfassen von mindestens einem Betriebszustand eines Schneidwerkzeughalters und Speichern des erfassten Betriebszustandes auf einem Steuermodul des Schneidwerkzeughalters,
b) Vorgeben eines einzunehmenden Betriebszustandes durch eine übergeordnete Steuereinheit oder durch ein den Betrieb des Schneidwerkzeughalters nicht unmittelbar beeinflussendes, mobiles Endgerät, indem der einzunehmende Betriebszustand mittels eines auf dem Steuermodul ausgebildeten TCP- und/oder UDP-basierten Servers auf dem Steuermodul des Schneidwerkzeughalters gespeichert wird,
c) Senden eines Startsignals an das Steuermodul des Schneidwerkzeughalters und
d) Ändern des Betriebszustandes des Schneidwerkzeughalters ausschließlich unter dem Regime des Steuermoduls bis der einzunehmende Betriebszustand erreicht ist.

Somit wird erreicht, dass das Steuermodul eigenständig durch den einzunehmenden Betriebszustand vorgegebene Funktionen ausführen kann, ohne dass auf die Zykluszeiten der übergeordneten Steuereinheit geachtet werden muss. Das Ändern des Betriebszustandes erfolgt aufgrund der eigenständigen Betätigung des Aktuators durch das Steuermodul in Echtzeit. Beispielsweise kann der einzunehmende Betriebszustand eine Position des Messers sein, welche von dem Steuermodul in Abhängigkeit der Signale von an dem Steuermodul angeschlossenen Positionsgebern durch eigenständiges Ansteuerung eines als Aktuator ausgebildeten, das Messer verstellenden Motors angefahren wird.

Insbesondere kann vorgesehen sein, dass in Schritt a) zusätzlich mindestens ein Parameter des Werkzeughalters erfasst und auf dem Steuermodul des Werkzeughalters gespeichert wird und der gespeicherte Parameter und der Betriebszustandes durch eine übergeordnete Steuereinheit oder durch ein den Betrieb des Schneidwerkzeughalters nicht unmittelbar beeinflussendes, mobiles Endgerät abgerufen und/oder geändert wird, wobei insbesondere in einem Schritt e) ein Schneidvorgang mit einer Vielzahl der Schneidwerkzeughalter unter dem Regime der übergeordneten Steuereinheit in Abhängigkeit der abgerufenen Parameter durchgeführt wird, wobei insbesondere die Betriebszustände der einzelnen Schneidwerkzeughalter in Abhängigkeit von den abgerufenen geänderten Parametern unter dem Regime des jeweiligen Steuermoduls eingestellt werden.

Da der oder die Parameter auf einfache Weise durch ein mobiles Endgerät erfasst werden können, ist das Betreiben einer Schneidmaschine weiter vereinfacht, wodurch der Bedienungsaufwand verringert wird.

Damit ein nicht mit dem Schneidwerkzeughalter verbundener Sensor einen Parameter des Schneidwerkzeughalters erfassen und übermitteln kann, ist vorgesehen, dass in Schritt a) ein nicht unmittelbar mit dem Steuermodul eines Schneidwerkzeughalters verbundener Sensor wenigstens einen Parameter und/oder Betriebszustand des Schneidwerkzeuges erfasst, welcher insbesondere mittels des mobilen Endgerätes an den auf dem Steuermodul des Schneidwerkzeughalters ausgebildeten Server übertragen wird und auf dem Steuermodul gespeichert wird.

In diesem Zusammenhang kann der Schneidwerkzeughalter zunächst durch das mobile Endgerät mittels eines an dem Schneidwerkzeughalter ausgebildeten, ein- oder zweidimensionalen, maschinenlesbaren Codes identifiziert werden. Somit kann der Benutzer auf einfache Weise den Schneidwerkzeughalter auswählen, für den er im Folgenden einen Parameter erfasst. Gegebenenfalls kann die Zuordnung des Schneidwerkzeughalters auch erst nach Erfassung des Parameters erfolgen.

Auch kann vorgesehen sein, dass ein Ausgangszustand eines Schneidwerkzeuges des Schneidwerkzeughalters durch das mobile Endgerät mittels eines an dem Schneidwerkzeug ausgebildeten, ein- oder zweidimensionalen, maschinenlesbaren Codes ermittelt wird und mittels des mobilen Endgerätes an das Steuermodul des Schneidwerkzeughalters übertragen wird und auf dem Steuermodul gespeichert wird.

Insbesondere erfolgt Schritt d) nicht ohne Freigabe durch die übergeordnete Steuereinheit.

Die mit Bezug zu der erfindungsgemäßen Vorrichtung offenbarten Details und Merkmale lassen sich an den entsprechenden Stellen auf das erfindungsgemäße Verfahren übertragen und umgekehrt.

Die Erfindung sowie das technische Umfeld werden im Folgenden anhand der Figuren beispielhaft erläutert, wobei darauf hinzuweisen ist, dass die Figuren eine bevorzugte Ausführungsform der Erfindung zeigen, diese jedoch nicht darauf beschränkt ist. Es zeigen schematisch
- Fig. 1:: Ein Schneidwerkzeughalter und ein mobiles Endgerät und
- Fig. 2:: eine Längsschneidemaschine mit einer Vielzahl von Schneidwerkzeughaltern.

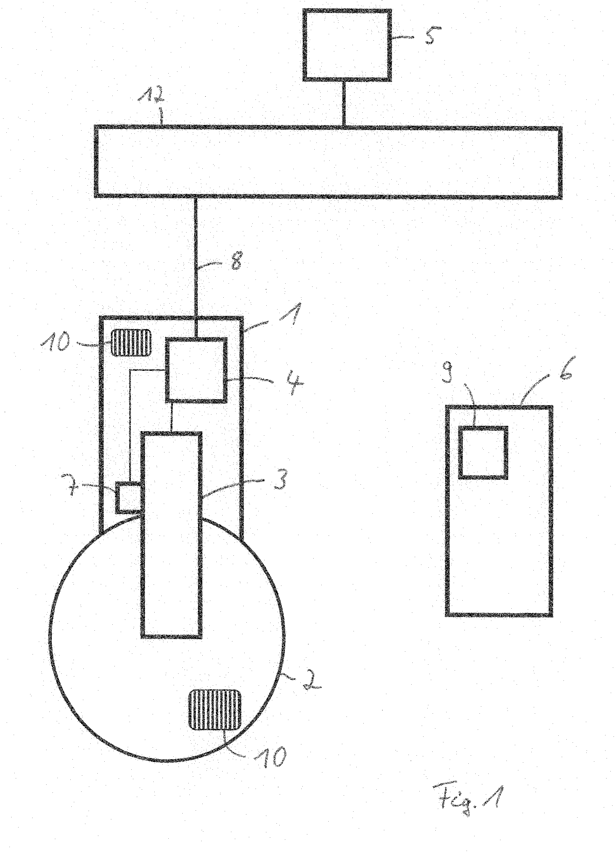

In Fig. 1 ist ein Messerhalter 1 mit einem daran angebrachten Rundmesser 2 dargestellt, wobei das Rundmesser 2 mittels eines Aktuators 3 in seiner Position relativ zu dem Messerhalter 1 verändert werden kann. An dem Messerhalter 1 ist ein Steuermodul 4 angebracht, das über entsprechende Leitungen mit dem Aktuator 3 und einem ersten Sensor 7 verbunden ist. Der erste Sensor 7 ist dazu eingerichtet, die Position des Rundmessers 2 zu ermitteln. An dem Messerhalter 1 und dem Rundmesser 2 ist jeweils ein maschinenlesbarer Code 10 ausgebildet.

Der über eine geeignete, nicht näher dargestellte Befestigung an einer Traverse befestigte Messerhalter 1 ist über ein Kabel 8 und ein Netzwerk 12 mit einer übergeordneten Steuereinheit verbunden.

Zudem ist in Fig. 1 ein mobiles Endgerät 6 dargestellt, welches einen zweiten Sensor 9 in der Form einer Kamera aufweist.

Das Steuermodul 4 ist so eingerichtet, dass es die von dem mehradrigen Kabel 8 bereitgestellten elektrischen Potentiale in Versorgungsspannungen für das Steuermodul 4 selbst, den Sensor 7 und den Aktuator 3 umwandelt.

Die Erfindung sieht vor, dass das Steuermodul 4 eigenständig den Aktuator 3 betätigt und dass auf dem Steuermodul 4 Informationen über den Betriebszustand des Messerhalters 1 gespeichert sind. Auf dem Steuermodul 4 ist zudem ein TCP- und/oder UDP-basierter Server eingerichtet, so dass die auf dem Steuermodul 4 gespeicherten Informationen beispielsweise über das TCP/IP-Protokoll an die übergeordnete Steuereinheit 5 oder an das mobile Endgerät 6 sendbar sind. Zudem können einzunehmende Betriebszustände und Parameter des Messerhalters 1 von dem mobilen Endgerät 6 auf dem Steuermodul 4 gespeichert werden.

Beispielsweise kann über das mobile Endgerät 6 und den Server auf dem Steuermodul 4 eine einzunehmende Position für das Rundmesser 2 auf dem Steuermodul 4 gespeichert werden. Nachdem die übergeordnete Steuereinheit 5 den einzunehmenden Zustand freigegeben hat und ein Startsignal an das Steuermodul 4 gesendet hat, betätigt das Steuermodul 4 eigenständig den Aktuator 3 unter Zugriff auf die von dem ersten Sensor 7 gelieferten Signale. Während der Einnahme des Betriebszustandes muss daher keine Kommunikation zwischen dem Steuermodul 4 und der übergeordneten Steuereinheit 5 stattfinden. Prinzipiell könnte der Schneidwerkzeughalter 1 ohne übergeordnete Steuereinheit 5 betrieben werden.

Der auf dem Messerhalter 1 angeordnete Code 10 dient dazu, dass der Messerhalter 1 über den zweiten Sensor 9 des mobilen Endgeräts 6 zunächst identifiziert werden kann, so dass ein im Folgenden von dem mobilen Endgerät 6 zu erfassender Parameter oder Betriebszustand des Messerhalters 1 diesem Messerhalter 1 zugeordnet werden kann. Ein solcher Parameter kann der Durchmesser des Rundmessers 2 sein, wobei beispielsweise der Ursprungsdurchmesser durch den auf dem Rundmesser 2 angeordneten Code 10 von dem mobilen Endgerät 6 erfasst werden kann. Somit kann auf einfache Weise eine Bedienperson zunächst den entsprechenden Messerhalter 1 identifizieren, und danach den zugehörigen Parameter für diesen Messerhalter 1 erfassen und an das entsprechende Steuermodul 4 übertragen.

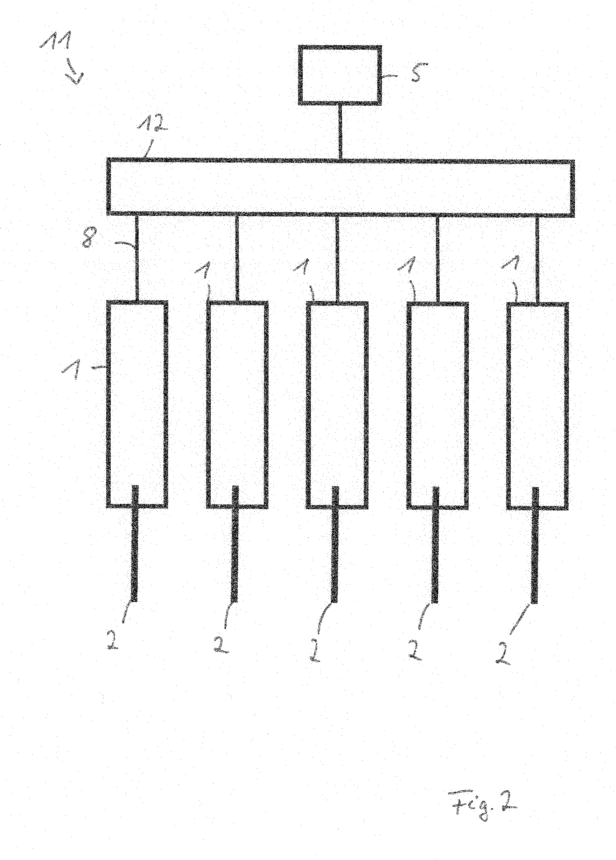

In Fig. 2 ist eine Schneidmaschine 11 mit einer Vielzahl von den in Fig. 1 beschriebenen Messerhaltern 1 dargestellt, die jeweils über ein Kabel 8 und ein Netzwerk 12 mit einer übergeordneten Steuereinheit 5 verbunden sind. Wie zuvor mit Bezug zum Beispiel der Fig. 1 beschrieben, kann ein Benutzer mit einem mobilen Endgerät 6 die einzunehmenden Betriebszustände eines jeden Messerhalters 1 vorgeben, Parameter des Messerhalters 1 bestimmen und über den auf den Steuermodulen 4 der Messerhalter 1 ausgebildeten Server an das entsprechende Steuermodul 4 übersenden. Nach Freigabe durch die übergeordnete Steuereinheit 5 kann dann der vorgegebene Schneidprozess erfolgen.

Durch die vorliegende Erfindung ist die Bedienung einer Schneidmaschine 11 stark vereinfacht und die Präzision der Veränderung der Betriebszustände der Messerhalter 1 erhöht.

### Bezugszeichenliste

- 1: Messerhalter
- 2: Rundmesser
- 3: Aktuator
- 4: Steuermodul
- 5: übergeordnete Steuereinheit
- 6: mobiles Endgerät
- 7: erster Sensor
- 8: Kabel
- 9: zweiter Sensor
- 10: Code
- 11: Schneidmaschine
- 12: Netzwerk

## Patentansprüche

1. Schneidwerkzeughalter (1) zum Halten und Antreiben eines Schneidwerkzeuges (2), umfassend mindestens einen Aktuator (3) zum Einstellen von mindestens einem Betriebszustand des Schneidwerkzeughalters (1), wobei an dem Schneidwerkzeughalter (1) ein mit dem Aktuator (3) verbundenes Steuermodul (4) angebracht ist, **dadurch gekennzeichnet, dass** das Steuermodul (4) den Aktuator (3) unmittelbar eigenständig betätigt und auf dem Steuermodul (4) Informationen über den Betriebszustand speicherbar sind, wobei auf dem Steuermodul (4) ein TCP- und/oder UDP-basierter Server eingerichtet ist, so dass Informationen von einem webbrowserfähigem Endgerät (6) über einen einzunehmenden Betriebszustand empfangbar und Informationen über den aktuellen Betriebszustand an das webbrowserfähige Endgerät (6) sendbar sind.

2. Schneidwerkzeughalter (1) nach Anspruch 1, **dadurch gekennzeichnet, dass** mindestens ein weiterer Parameter des Schneidwerkzeughalters (1) auf dem Steuermodul (4) speicherbar ist, wobei zumindest der auf dem Steuermodul (4) gespeicherte, weitere Parameter sowohl von einer übergeordneten Steuereinheit (5) als auch von einem den Betrieb des Schneidwerkzeughalters (1) nicht unmittelbar beeinflussenden mobilen Endgerät (6) abrufbar und/oder veränderbar ist.

3. Schneidwerkzeughalter (1) nach Anspruch 1 oder 2, wobei das Steuermodul (4) sowohl Signale, insbesondere von einer übergeordneten Steuereinheit (5) als auch die Energie zum Betreiben zumindest des Aktuators (3) über ein einziges Kabel (8) erhält.

4. Schneidwerkzeughalter (1) nach einem der vorhergehenden Ansprüche, wobei ein den Parameter und/oder den Betriebszustand des Schneidwerkzeuges ermittelnder Sensor (7) mit dem Steuermodul (4) unmittelbar verbunden ist.

5. Schneidwerkzeughalter (1) nach einem der Ansprüche 1 bis 4, wobei ein Parameter und/oder Betriebszustand des Schneidwerkzeughalters (1) oder des Schneidwerkzeuges (2) mittels eines nicht unmittelbar mit dem Steuermodul (4) verbundenen, insbesondere in einem mobilen Endgerät (6) integrierten Sensors (9) erfassbar ist und insbesondere von dem mobilen Endgerät (6) an das Steuermodul (4) übertragbar und auf dem Steuermodul (4) speicherbar ist.

6. Schneidwerkzeughalter (1) nach einem der vorhergehenden Ansprüche, wobei ein ein- oder zweidimensionaler, maschinenlesbarer Code (10) außen auf dem Schneidwerkzeughalter (1) ausgebildet ist, der den Schneidwerkzeughalter (1), insbesondere für das mobile Endgerät (6) identifiziert.

7. Schneidwerkzeughalter (1) nach einem der vorhergehenden Ansprüche, wobei ein ein- oder zweidimensionaler, maschinenlesbarer Code (10) auf dem Schneidwerkzeug (2) ausgebildet ist, der einen Ausgangszustand des Schneidwerkzeuges (2) wiedergibt, so dass der Ausgangszustand insbesondere für das mobile Endgerät (6) erfassbar ist, wodurch der Ausgangszustand an das Steuermodul (4) übermittelbar und auf dem Steuermodul (4) speicherbar ist.

8. Schneidwerkzeughalter (1) nach einem der vorhergehenden Ansprüche, wobei das Steuermodul (4) so eingerichtet ist, dass eine Änderung eines Betriebszustandes nur nach vorheriger Freigabe durch eine übergeordnete Steuereinheit (5) erfolgt.

9. Schneidmaschine (11), insbesondere Längsschneidemaschine mit einer Mehrzahl von Schneidwerkzeughaltern (1) nach einem der Ansprüche 1 bis 8, die eine zentrale, übergeordnete Steuereinheit (5) umfasst, welche die Vielzahl der Schneidwerkzeughalter (1) steuert.

10. Verfahren zum Betreiben einer Schneidmaschine (11) mit einer Mehrzahl von Schneidwerkzeughaltern (1), umfassend zumindest die folgengemäss Anspruch 1 den Schritte:
a) Erfassen von mindestens einem Betriebszustand eines Schneidwerkzeughalters (1) und Speichern des erfassten Betriebszustandes auf einem Steuermodul (4) des Schneidwerkzeughalters (1),
b) Vorgeben eines einzunehmenden Betriebszustandes durch eine übergeordnete Steuereinheit (5) oder durch ein den Betrieb des Schneidwerkzeughalters nicht unmittelbar beeinflussendes, mobiles Endgerät (6), indem der einzunehmende Betriebszustand mittels eines auf dem Steuermodul (4) ausgebildeten TCP- und/oder UDP-basierten Servers auf dem Steuermodul (4) des Schneidwerkzeughalters gespeichert wird,
c) Senden eines Startsignals an das Steuermodul (4) des Schneidwerkzeughalters (1) und
d) Ändern des Betriebszustandes des Schneidwerkzeughalters (1) ausschließlich unter dem Regime des Steuermoduls (4) bis der einzunehmende Betriebszustand erreicht ist.

11. Verfahren nach Anspruch 10, wobei in Schritt a) zusätzlich mindestens ein Parameter des Schneidwerkzeughalters (1) erfasst und auf dem Steuermodul (4) des Schneidwerkzeughalters (1) gespeichert wird und der gespeicherte Parameter und der Betriebszustandes durch eine übergeordnete Steuereinheit (5) oder durch ein den Betrieb des Schneidwerkzeughalters (1) nicht unmittelbar beeinflussendes, mobiles Endgerät (6) abgerufen und/oder geändert wird, wobei insbesondere in einem Schritt e) ein Schneidvorgang mit einer Vielzahl der Schneidwerkzeughalter (1) unter dem Regime der übergeordneten Steuereinheit (5) in Abhängigkeit der abgerufenen Parameter durchgeführt wird, wobei insbesondere die Betriebszustände der Schneidwerkzeughalter (1) in Abhängigkeit von den abgerufenen geänderten Parametern unter dem Regime des jeweiligen Steuermoduls (4) eingestellt werden.

12. Verfahren nach Anspruch 10 oder 11, wobei in Schritt a) ein nicht unmittelbar mit dem Steuermodul (4) eines Schneidwerkzeughalters (1) verbundener Sensor (9) wenigstens einen Parameter und/oder Betriebszustand des Schneidwerkzeuges (2) erfasst, welcher insbesondere mittels des mobilen Endgerätes (6) an den auf dem Steuermodul (4) des Schneidwerkzeughalters (1) ausgebildeten TCP- und/oder UDP-basierten Server übertragen wird und auf dem Steuermodul (4) gespeichert wird.

13. Verfahren nach Anspruch 12, wobei der Schneidwerkzeughalter (1) zunächst durch das mobile Endgerät (6) mittels eines an dem Schneidwerkzeughalter (1) ausgebildeten, ein- oder zweidimensionalen, maschinenlesbaren Codes (10) identifiziert wird.

14. Verfahren nach Anspruch 12 oder 13, wobei ein Ausgangszustand eines Schneidwerkzeuges (2) des Schneidwerkzeughalters (1) durch das mobile Endgerät (6) mittels eines an dem Schneidwerkzeug (2) ausgebildeten, ein- oder zweidimensionalen, maschinenlesbaren Codes (10) ermittelt wird und mittels des mobilen Endgerätes (6) an das Steuermodul (4) des Schneidwerkzeughalters (1) übertragen wird und auf dem Steuermodul (4) gespeichert wird.

15. Verfahren nach einem der Ansprüche 10 bis 14, wobei Schritt d) nicht ohne Freigabe durch die übergeordnete Steuereinheit (5) erfolgt.

## Claims

1. A cutting tool holder (1) for holding and actuating a cutting tool (2), comprising at least one actuator (3) for setting at least one operating state of the cutting tool holder (1), wherein a control module (4) connected with the actuator (3) is fastened to the cutting tool holder (1), **characterized in that** the control module (4) directly activates the actuator (3) on its own, and that information about the operating state can be stored on the control module (4), wherein a TCP- and/or UDP-based server is set up on the control module (4), so that information about an operating state to be assumed can be received by a web browser-enabled terminal (6), and information about the current operating state can be transmitted to the web browser-enabled terminal (6).

2. The cutting tool holder (1) according to claim 1, **characterized in that** at least one additional parameter of the cutting tool holder (1) can be stored on the control module (4), wherein at least the additional parameter stored on the control module (4) can be retrieved and/or modified by both a higher-level control unit (5) and by a mobile terminal (6) that does not directly influence the operation of the cutting tool holder (1).

3. The cutting tool holder (1) according to claim 1 or 2, wherein the control module (4) receives both signals, in particular from a higher-level control unit (5), and the energy for operating at least the actuator (3) via a single cable (8).

4. The cutting tool holder (1) according to one of the preceding claims, wherein a sensor (7) that determines the parameter and/or the operating state of the cutting tool is directly connected with the control module (4).

5. The cutting tool holder (1) according to one of claims 1 to 4, wherein a parameter and/or operating state of the cutting tool holder (1) or of the cutting tool (2) can be ascertained by means of a sensor (9) not directly connected with the control module (4), in particular integrated into a mobile terminal (6), and in particular can be transferred from the mobile terminal (6) to the control module (4) and stored on the control module (4).

6. The cutting tool holder (1) according to one of the preceding claims, wherein a one- or two-dimensional, machine-readable code (10) is formed outside on the cutting tool holder (1), which identifies the cutting tool holder (1), in particular for the mobile terminal (6).

7. The cutting tool holder (1) according to one of the preceding claims, wherein a one- or two-dimensional, machine-readable code (10) is formed on the cutting tool (2), which reflects an initial state of the cutting tool (2), so that the initial state can be ascertained in particular by the mobile terminal (6), making it possible to transfer the initial state to the control module (4) and store it on the control module (4).

8. The cutting tool holder (1) according to one of the preceding claims, wherein the control module (4) is set up in such a way that a change in operating state only takes place after approved beforehand by a higher-level control unit (5).

9. A cutting machine (11), in particular a longitudinal cutting machine with a plurality of cutting tool holders (1) according to one of claims 1 to 8, which comprises a central, higher-level control unit (5) that controls the plurality of cutting tool holders (1).

10. A method for operating a cutting machine (11) with a plurality of cutting tool holders (1) according to claim 1, comprising at least the following steps:
a) Ascertaining at least one operating state of a cutting tool holder (1) and storing the ascertained operating state on a control module (4) of the cutting tool holder (1),
b) Allocating an operating state to be assumed via a higher-level control unit (5) or via a mobile terminal (6) that does not directly influence the operation of the cutting tool holder, by storing the operating state to be assumed by means of a TCP- and/or UDP-based server formed on the control module (4) of the cutting tool holder,
c) Transmitting a start signal to the control module (4) of the cutting tool holder (1), and
d) Changing the operating state of the cutting tool holder (1) exclusively under the regime of the control module (4) until the operating state to be assumed has been reached.

11. The method according to claim 10, wherein, in step a), at least one parameter of the cutting tool holder (1) is additionally ascertained and stored on the control module (4) of the cutting tool holder (1), and the stored parameter and the operating state are retrieved and/or modified by a higher-level control unit (5) or by a mobile terminal (6) that does not directly influence the operation of the cutting tool holder (1), wherein, in particular in a step e), a cutting process is performed with a plurality of the cutting tool holders (1) under the regime of the higher-level control unit (5) as a function of the retrieved parameters, wherein in particular the operating states of the cutting tool holder (1) are set as a function of the retrieved, modified parameters under the regime of the respective control module (4).

12. The method according to claim 10 or 11, wherein, in step a), a sensor (9) not directly connected with the control module (4) of a cutting tool holder (1) ascertains at least one parameter and/or operating state of the cutting tool (2), which in particular by means of the mobile terminal (6) is transferred to the TCP- and/or UDP-based server formed on the control module (4) of the cutting tool holder (1) and stored on the control module (4).

13. The method according to claim 12, wherein the cutting tool holder (1) is initially identified by the mobile terminal (6) by means of a one- or two-dimensional, machine-readable code (10) formed on the cutting tool holder (1).

14. The method according to claim 12 or 13, wherein an initial state of a cutting tool (2) of the cutting tool holder (1) is determined by the mobile terminal (6) by means of a one- or two-dimensional, machine-readable code (10) formed on the cutting tool (2), and by means of the mobile terminal (6) is transferred to the control module (4) of the cutting tool holder (1) and stored on the control module (4).

15. The method according to one of claims 10 to 14, wherein step d) does not take place without approval by the higher-level control unit (5).

## Revendications

1. Porte-outil de coupe (1) pour maintenir et entraîner un outil de coupe (2), comprenant au moins un actionneur (3) pour le réglage d'au moins un état de fonctionnement de porte-outil de coupe (1), sachant que sur le porte-outil de coupe (1) est monté un module de commande (4) relié à l'actionneur (3), **caractérisé en ce que** le module de commande (4) actionne l'actionneur directement de façon autonome et des informations sur l'état de fonctionnement peuvent être mémorisées sur le module de commande (4), sachant qu'un serveur à base TCP et/ou UDP est agencé sur le module de commande (4) de telle sorte que des informations sur un état de fonctionnement à adopter peuvent être reçues par un terminal (6) capable de naviguer sur Internet et des informations sur l'état de fonctionnement actuel peuvent être envoyées au terminal (6) capable de naviguer sur Internet.

2. Porte-outil de coupe (1) selon la revendication 1, **caractérisé en ce qu'**au moins un autre paramètre du porte-outil de coupe (1) peut être mémorisé sur le module de commande (4), sachant qu'au moins l'autre paramètre mémorisé sur le module de commande (4) peut être interrogé et/ou modifié tant par une unité de commande supérieure (5) que par un terminal mobile (6) n'influençant pas directement le fonctionnement du porte-outil de coupe (1).

3. Porte-outil de coupe (1) selon la revendication 1 ou 2, sachant que le module de commande (4) reçoit par le biais d'un câble unique (8) aussi bien des signaux, en particulier d'une unité de commande supérieure (5) que de l'énergie pour faire fonctionner au moins l'actionneur (3).

4. Porte-outil de coupe (1) selon l'une quelconque des revendications précédentes, sachant qu'un capteur (7) déterminant le paramètre et/ou l'état de fonctionnement de l'outil de coupe est directement lié au module de commande (4).

5. Porte-outil de coupe (1) selon l'une quelconque des revendications 1 à 4, sachant qu'un paramètre et/ou état de fonctionnement du porte-outil de coupe (1) ou de l'outil de coupe (2) peut être saisi au moyen d'un capteur (9) relié non directement au module de commande (4), en particulier intégré dans un terminal mobile (6) et peut être transmis en particulier par le terminal mobile (6) au module de commande et mémorisé sur le module de commande (4).

6. Porte-outil de coupe (1) selon l'une quelconque des revendications précédentes, sachant qu'un code (10) uni- ou bidimensionnel lisible par une machine est constitué en dehors sur le porte-outil de coupe (1), qui identifie le porte-outil de coupe (1), en particulier pour le terminal mobile (6).

7. Porte-outil de coupe (1) selon l'une quelconque des revendications précédentes, sachant qu'un code (10) uni- ou bidimensionnel lisible par une machine est constitué sur l'outil de coupe (2), qui reproduit un état initial de l'outil de coupe (2) de telle manière que l'état initial peut être saisi en particulier pour le terminal mobile (6), l'état initial pouvant de ce fait être transmis au module de commande (4) et mémorisé sur le module de commande (4).

8. Porte-outil de coupe (1) selon l'une quelconque des revendications précédentes, sachant que le module de commande (4) est agencé de telle manière qu'une modification d'un état de fonctionnement n'a lieu qu'après validation préalable par une unité de commande supérieure (5).

9. Machine de coupe (11), en particulier machine de coupe longitudinale avec une pluralité de porte-outils de coupe (1) selon l'une quelconque des revendications 1 à 8, qui comprend une unité de commande centrale supérieure (5), laquelle commande la pluralité de porte-outils de coupe (1).

10. Procédé destiné à faire fonctionner une machine de coupe (11) avec une pluralité de porte-outils de coupe (1) selon la revendication 1, comprenant au moins les étapes suivantes :
a) saisie d'au moins un état de fonctionnement d'un porte-outil de coupe (1) et mémorisation de l'état de fonctionnement saisi sur un module de commande (4) du porte-outil de coupe (1),
b) prédétermination d'un état de fonctionnement à adopter par une unité de commande supérieure (5) ou par un terminal mobile (6) n'influençant pas directement le fonctionnement du porte-outil de coupe , l'état de fonctionnement à adopter étant mémorisé sur le module de commande (4) du porte-outil de coupe au moyen d'un serveur à base TCP et/ou UDP constitué sur le module de commande (4),
c) envoi d'un signal de mise en marche au module de commande (4) du porte-outil de coupe (1) et
d) modification de l'état de fonctionnement du porte-outil de coupe (1) exclusivement sous le régime du module de commande (4) jusqu'à ce que l'état de fonctionnement à adopter ait été atteint.

11. Procédé selon la revendication 10, sachant que dans l'étape a) au moins un paramètre du porte-outil de coupe (1) est en plus saisi et est mémorisé sur le module de commande (4) du porte-outil de coupe (1) et le paramètre mémorisé de l'état de fonctionnement est interrogé et/ou modifié par une unité de commande supérieure (5) ou par un terminal mobile (6) n'influençant pas directement le fonctionnement du porte-outil de coupe (1), sachant en particulier que dans une étape e) une opération de coupe est effectuée avec une pluralité de porte-outils de coupe (1) sous le régime de l'unité de commande supérieure (5) en fonction des paramètres interrogés, sachant en particulier que les états de fonctionnement des porte-outils de coupe (1) sont réglés en fonction des paramètres modifiés interrogés sous le régime du module de commande (4) respectif.

12. Procédé selon la revendication 10 ou 11, sachant que dans l'étape a) un capteur (9) non directement relié au module de commande (4) d'un porte-outil de coupe (1) saisit au moins un paramètre et/ou un état de fonctionnement de l'outil de coupe (2), lequel est transmis en particulier au moyen du terminal mobile (6) au serveur à base TCP et/ou UDP constitué sur le module de commande (4) du porte-outil de coupe (1) et est mémorisé sur le module de commande (4).

13. Procédé selon la revendication 12, sachant que le porte-outil de coupe (1) est identifié d'abord par le terminal mobile (6) au moyen d'un code uni- ou bidimensionnel (10), lisible par une machine, constitué sur le porte-outil de coupe (1).

14. Procédé selon la revendication 12 ou 13, sachant qu'un état initial d'un outil de coupe (2) du porte-outil de coupe (1) est déterminé par le terminal mobile (6) au moyen d'un code uni- ou bidimensionnel lisible par une machine (10) constitué sur l'outil de coupe (2) et est transmis au moyen du terminal mobile (6) au module de commande (4) du porte-outil de coupe (1) et est mémorisé sur le module de commande (4).

15. Procédé selon l'une quelconque des revendications 10 à 14, sachant que l'étape d) n'a pas lieu sans validation par l'unité de commande supérieure (5).
